Europäisches Patentamt

European Patent Office

Office européen des brevets

(19)

(11) Publication number: **0 005 344**
**B1**

(12) **EUROPEAN PATENT SPECIFICATION**

(45) Date of publication of patent specification: **21.09.83**

(21) Application number: **79300693.3**

(22) Date of filing: **25.04.79**

(51) Int. Cl.³: **C 08 F  214/08**
**//(C08F214/08, 220/14)**

(54) Crystallizable controlled composition interpolymers of vinylidene chloride and methyl methacrylate and method of preparing same.

(30) Priority: **03.05.78 US  902313**

(43) Date of publication of application:
**14.11.79 Bulletin 79/23**

(45) Publication of the grant of the patent:
**21.09.83 Bulletin 83/38**

(84) Designated Contracting States:
**DE FR GB IT NL**

(56) References cited:
**GB - A - 1 333 566**

(73) Proprietor: **THE DOW CHEMICAL COMPANY**
**Dow Center 2030 Abbott Road Post Office Box**
**1967**
**Midland Michigan 48640 (US)**

(72) Inventor: **Gibbs, Dale Sabin**
**2607 Mt. Vernon**
**Midland Michigan (US)**
Inventor: **Foye, Duane Francis**
**105 N. Fenmore Merril**
**Saginaw Michigan (US)**

(74) Representative: **Allard, Susan Joyce et al,**
**BOULT, WADE & TENNANT 27 Furnival street**
**London EC4A 1PQ (GB)**

Courier Press, Leamington Spa, England.

# 0 005 344

### Crystallizable controlled composition interpolymers of vinylidene chloride and methyl methacrylate and method of preparing same

While the homopolymer of vinylidene chloride is generally insoluble at room temperature in conventional organic solvents, e.g., in pure tetrahydrofuran, useful materials, soluble in solvents such as mixtures of tetrahydrofuran and toluene at room temperature, can be made by copolymerization of vinylidene chloride with lesser quantities of other monomers such as acrylonitrile, methacrylonitrile, methyl acrylate (other $C_2$—$C_{13}$ alcohol esters of acrylic or methacrylic acid, e.g., methyl methacrylate), vinylidene cyanide, acrylic acid, itaconic acid, and chloroacrylonitrile, vinyl chloride, vinyl bromide, vinylidene bromide and the like.

These materials find particular use in the cellophane industry where a very thin (usually 0.00127 mm—0.05 mil) coating of so-called "soluble" vinylidene chloride polymers is deposited from solvent such as the solvent combinations mentioned above, on one or both sides of cellophane. (Cellophane is a Registered Trade Mark). This thin coating serves several purposes in that it causes the cellophane film to be a good gas or water-vapor barrier film for packaging purposes where either a loss of or gain in gas or water content of the product would render the product less attractive for sale. In addition, the coating promotes retention of water (which acts as a plasticizer usually along with some glycol or glycerine) in the cellophane, thus helping to prevent brittle fracture of the film. Finally, such coatings provide a heat-sealable outer coating where cellophane, by its very nature, cannot be heat-sealed.

For cellophane manufacturers concerned with applying such thin coatings to cellophane, the solubility, heat-seal temperature, flexibility, and water-vapor transmission rate (WVTR) are particularly important properties. Usually the desired properties include as low a heat-seal temperature and WVTR as possible coupled with low temperature solubility in inexpensive solvents or solvent combinations.

Since the WVTR of a vinylidene chloride interpolymer is directly related to the mole percent of vinylidene chloride in the polymer, as the most important factor in the manufacture of such resins, it is advantageous to get the mole percent of vinylidene chloride as high as possible consistent with solubility in the desired workable solvent systems. Since high vinylidene chloride content means strong crystalline forces in the polymer, these two factors are diametrically opposed, i.e. high vinylidene chloride content, highly crystalline polymers being the least soluble but offering the lowest WVTR.

As the mole percent of vinylidene chloride is raised in a polymer series, it is obvious that a percentage range is reached where the polymers rapidly change from ones which are permanently amorphous or which crystallize only slowly and incompletely in coatings to ones which are highly crystalline and difficult to dissolve. Consequently, careful control over the polymer composition during polymerization is needed to avoid the formation of a higher vinylidene chloride content than intended, since such could result in polymers unsuitable for coating purposes due to insolubility or premature crystallization in solution. The tendency for such polymers to be insoluble or prematurely crystallize in solution may be measured by light transmission measurements of a 15 to 20 percent lacquer solution in, for example, a solvent mixture of 65 percent tetrahydrofuran and 35 percent toluene, after aging the solution at 25°C for 24 hours, against a reference of the pure solvent mixture. Careful control of the percent light transmission, hereinafter called "haze", is essential for coating use of these polymers, especially those having a high mole percent vinylidene chloride, since the tiny insoluble crystals which cause the haze by incomplete dissolution also serve as nuclei for overall crystallization once the interpolymer has been deposited as a thin coating on a substrate. The rate of crystallization in a coating, which is affected by the number of nuclei present, is very important for commercial operations since a rate of crystallization which is too slow will result in blocking of the coated film (which is typically wound in large rolls long before crystallization is complete).

Our British Patent Specification No. 1333566 describes a process for preparing high (88 to 93 mole percent) vinylidene chloride polymer content copolymers having an exceptionally narrow compositional range and having enhanced solubility in organic solvents and good barrier properties. The copolymers are prepared by (1) dissolving in a monomer-free aqueous emulsion reaction media any component of the monomer mixture to be polymerised that is appreciably soluble in both the water and subsequent oil phases of the reaction media in an amount sufficient to satisfy the partition coefficient of the component between the water and oil phases, then (2) maintaining the reaction media at an essentially constant temperature between 50°C and 65°C while, (3) adding a second monomer charge in amount between 3 and 20 weight percent of total monomer wherein the second monomer charge is composed of a ratio of monomers sufficient to form a copolymer of from 88 to 93 mole percent vinylidene chloride and 12 to 7 mole percent of at least one other ethylenically unsaturated comonomer; then (4) maintaining the polymerization reaction at an essentially constant temperature between 50°C and 65°C under autogenous pressure while introducing a continuous feed of the remaining monomers at the termination of polymerization of the second monomer charge and before a pressure drop of greater than 13.8 kPa (2 p.s.i.) occurs in the reaction vessel, with the remaining monomers being added in the same ratio present in the second monomer charge and at a rate of between 4.5 to 11.5 percent of total monomer per hour, then (5) continuing the polymerisation reaction after all monomers have been added until about a 50 percent drop in reaction pressure occurs, then (6) immediately cooling the reaction mixture and removing any unreacted monomer.

2

This process provides a close control of copolymeric drift in the batch system and also results in the minimum water vapour transmission rate and maximum resin solubility.

The present invention provides a combination of monomers and a method for the polymerization thereof which is superior to anything known heretofore for attainment of optimum relative viscosity and solubility properties in the absence of the use of a major proportion of acrylonitrile or methacrylonitrile.

In one aspect the present invention provides a crystallizable, controlled composition inter-polymer consisting essentially of (a) from 88 to 92 mole percent vinylidene chloride, (b) from 8 to 12 mole percent methyl methacrylate, and (c) one or more further ethylenically unsaturated comonomers or a further quantity of methyl methacrylate, in an amount of up to 3 weight percent, based on the combined weight of (a) and (b); the interpolymer having a relative viscosity of at least 1.40 at 25°C as a 1 percent solution in tetrahydrofuran and being capable of forming substantially haze-free solutions when present in an amount of 20 percent solids in a solvent mixture comprising 65 percent by weight tetrahydrofuran and 35 percent by weight toluene as measured in terms of at least 85 percent transmission of the solution, after ageing at 25°C for a period of 24 hours, against a reference of the pure solvent mixture using an ultraviolet spectrophotometer operating at a wavelength of 640 nm.

The crystallizable interpolymer of the invention is preferably one in which the ethylenically unsaturated comonomer is methyl acrylate, methyl methacrylate, vinyl chloride, methacrylic acid or vinyl acetate. In a particularly preferred aspect of the invention the interpolymer consists of (a) 90 mole percent vinylidene chloride, (b) 10 mole percent methyl methacrylate; and (c) one or more further ethylenically unsaturated comonomers or a further quantity of methyl methacrylate, in an amount of from 1 to 3 weight percent, based on the combined weight of (a) and (b).

In another aspect of the present invention provides a process for preparing, in aqueous emulsion, a crystallizable, controlled composition interpolymer consisting essentially of (a) from 88 to 92 mole percent vinylidene chloride, (b) from 8 to 12 mole percent methyl methacrylate, and (c) one or more further ethylenically unsaturated comonomers or a further quantity of methyl methacrylate, in an amount of up to 3 weight percent, based on the combined weight of (a) and (b); which process comprises the sequential steps of: polymerizing a primary monomer mixture consisting essentially of from 88 to 92 mole percent vinylidene chloride and from 8 to 12 mole percent methyl methacrylate in an aqueous polymerization medium containing an emulsifier, a polymerization initiator, and, optionally, a polymerizable acid; wherein from 35 to 45 percent of the primary monomer mixture is added to the aqueous medium at a rate sufficient to continuously provide an excess of unreacted monomer in the aqueous medium and the remainder of the primary monomer mixture is added to the aqueous medium at a rate sufficient to continuously preclude the presence of an excess of unreacted monomer in the aqueous medium; and following the addition of substantially all of the primary monomer mixture, and component (a) to the polymerization medium in an amount and under conditions sufficient to control composition drift in the crystallizable interpolymer.

The crystallizable, controlled composition interpolymers of the present invention are effectively prepared in an aqueous emulsion polymerization medium containing conventional types of emulsifiers and initiators (and, optionally, a polymerizable acid such as acrylic acid, itaconic acid, or methacrylic acid) in amounts typically used in the preparation of vinylidene chloride polymers. In accordance with conventional practice, the aqueous medium will be maintained throughout the reaction period at a temperature conducive to polymerization at an acceptable rate. Such temperatures will generally range from 30°C to 75°C and, preferably, from 40°C to 55°C.

In a preferred aspect of the invention the primary monomer mixture is 90 mole percent vinylidene chloride and 10 mole percent methyl methacrylate.

The process for obtaining interpolymers having the combination of properties required by the present invention comprises a first step of adding the primary monomer mixture (i.e. from 88 to 92 mole percent vinylidene chloride and from 8 to 12 mole percent methyl methacrylate) to the aqueous polymerization medium in a manner such that (A) from 35 to 45 weight percent of the primary monomer mixture is first added at a rate sufficient to continuously provide an excess of unreacted monomer in the medium (i.e., a "flooding" stage) and then (B) the remainder of the primary monomer mixture is added at a rate sufficient to continuously preclude the presence of an excess of unreacted monomer in the medium (i.e., a "starved" stage). This polymerization technique appears to be necessary in order to obtain interpolymers having a relative viscosity above 1.40, preferably between 1.45 and 1.50, at 25°C as a 1 percent solution in tetrahydrofuran, which is necessary for the formation of coatings having adequate flexibility. In contrast, interpolymers comprising primarily vinylidene chloride and methyl methacrylate made by prior known techniques are characterized by a lower molecular weight, i.e., relative viscosities at 25°C significantly less than 1.40, resulting in coatings having inadequate flexibility.

The aforementioned "first step" of the process can be accomplished by continuously introducing the primary monomer mixture to the aqueous polymerization medium in a manner such that the ratio of vinylidene chloride to methyl methacrylate being added remains substantially constant throughout the entire period of addition. Alternatively, the ratio of vinylidene chloride to methyl methacrylate can be moderately varied during the period of addition (e.g., by increasing the amount of vinylidene chloride added during the initial period of the flooding stage) so long as the relative amounts of total monomer

3

added during both the flooding stage and the starved stage remains in the prescribed range of 88 to 92 mole percent vinylidene chloride and 8 to 12 mole percent methyl methacrylate.

In order to provide better control over particle size, it is advantageous to initially form a seed emulsion within the aqueous medium and then continuously add monomers in the manner described. If desired, the seed emulsion can be provided by adding to the aqueous medium preformed polymeric seed particles which are advantageously formed from a monomer composition substantially the same as the primary monomer mixture. Preferably, however, the seed emulsion is provided by initially introducing a small amount, usually 4 to 6 weight percent, of the primary monomer mixture to the aqueous medium, followed by the prescribed addition and polymerization of the remaining amount of the primary monomer mixture. Since the seed step in the latter technique is essentially a small batch reaction in which composition is likely to drift due to the unequal reactivity ratios between vinylidene chloride and methyl methacrylate, it is most advantageous to begin continuous addition of the remainder of the primary monomer mixture as soon as the seed reaction shows any signs of drifting in composition as indicated, for example, by a pressure drop in the head space within the reactor. Generally, the addition of the remainder of the primary monomer mixture should be started as soon as a pressure drop of 13.8 kPa (2 psi) occurs in the reactor.

Due to the unequal reactivity between the monomers, methyl methacrylate polymerizes and enters the interpolymer much faster than vinylidene chloride. Consequently, the polymer being formed after the end of the primary monomer mixture addition drifts higher and higher in vinylidene chloride content. At some point, such drift towards higher vinylidene chloride content will render the interpolymer insoluble in the solvent system chosen for end-use coating purposes. Even though this point of insolubility will vary with the solvent strength of a particular solvent or mixture of solvents, for any given solvent system, there will be a threshold composition at which solutions of the interpolymer will be unstable and appear hazy. This may be called the "haze threshold". It is one of the unique characteristics of the process of the present invention that interpolymer composition drift during polymerization can be controlled so as to avoid the formation of a haze threshold composition while permitting sufficient drift towards high vinylidene chloride content to nucleate crystallization in coatings prepared from the interpolymers.

With regard to such crystallization nucleation, it is most advantageous for commercial film-coating operations that the coatings prepared from the interpolymers of the present invention crystallize in a sufficiently short period of time to permit rapid coating and subsequent roll-winding speeds without resulting in blocking of the wound film. Furthermore, it is advantageous that such coatings crystallize rapidly enough to achieve maximum barrier and heat-seal strength within a reasonably short period of time to enable the coated films to be used for end-use applications as soon as possible after the coating operations are completed.

With regard to haze threshold, the interpolymers of the present invention must be capable of yielding substantially haze-free solutions when present in an amount of 20 percent by weight in a solvent mixture comprising 65 percent by weight tetrahydrofuran and 35 percent by weight toluene, as measured in terms of at least 85 percent transmission of the solution, after aging at 25°C for a period of 24 hours, against a reference of the pure solvent mixture using an ultraviolet spectrophotometer operating at a wavelength of 640 nm.

In order to achieve the prescribed balance between haze threshold and crystallization nucleation, it is essential for the process of this invention that, following the addition of substantially all the primary monomer mixture, one or more ethylenically unsaturated comonomers is added to the aqueous medium in an amount and under conditions sufficient to control drift in the interpolymer composition. (For convenience only, this step of the process will be hereinafter referred to as the "end-shot" step.)

Comonomers which can be used in the end-shot step include any ethylenically unsaturated monomers which are copolymerizable with vinylidene chloride and which will effectively control drift in the interpolymer composition without substantially decreasing the beneficial properties, such as barrier, of the resulting interpolymers. Since it is expected that there are some ethylenically unsaturated comonomers, such as acrylonitrile, which might not suitably control composition drift when used alone, but which could be used effectively in combination with one or more monomers (such as, for example, a mixture of 75 weight percent acrylonitrile and 25 weight percent methyl acrylate), the term "end-shot comonomer" is intended to include single monomers as well as mixtures of monomers which perform in the manner described. Particularly preferred end-shot comonomers which can be employed include, for example, methyl acrylate, methyl methacrylate, vinyl acetate, vinyl propionate, methacrylic acid, and vinyl chloride.

The amount of end-shot comonomer needed to control drift in the interpolymer composition will vary with the relative reactivity of the particular comonomer or comonomers chosen as well as the rate of polymerization initiation and the rate of addition to the aqueous medium. Typically, the amount of end-shot comonomer will range from 1 to 3 percent of the weight of the primary monomer mixture.

Preferably, the addition of the end-shot comonomer to the aqueous medium is begun immediately after all of the primary monomer mixture has been added. If desired, however, the addition of the end-shot comonomer can be started either a short time before or a short time after the addition of the primary monomer mixture has been completed. The rate at which the end-shot comonomer is added to the aqueous medium should advantageously be synchronized with the polymerization occurring therein so that sufficient comonomer is always available during the end-shot step to control composition drift. Accordingly, the rate of addition of the end-shot comonomer will vary with the reactivity of the particular comonomer or comonomers employed as well as the rate of initiation within the aqueous medium. Typically, the rate of addition will be such that the necessary total amount of end-shot comonomer is added continuously to the aqueous medium over a period of 1/4 to 3 hours depending upon the initiation rate; i.e., from 1 to 3 hours when the rate of initiation is relatively slow and from 1/4 to 2 hours when the rate of initiation is relatively fast.

The rate of initiation can be increased (and, accordingly, the rate of addition can be increased) during the end-shot step, for example, by adding an additional amount of polymerization initiator to the aqueous medium just prior to or concurrent with the addition of the comonomer during the end-shot step. Alternatively, if an initiator, such as sodium persulfate, has been used during the first polymerization step, the rate of initiation can be increased during the end-shot step by continuously adding a material, such as sodium bisulfite, which forms a redox system with that initiator. Other methods for increasing the rate of initiation will be readily apparent to those skilled in the art.

Conventional amounts and types of emulsion polymerization initiators, emulsifiers, and other additives may be used in the process of the present invention. Small amounts of other monomeric materials, such as the aforementioned polymerizable acids, may be added during the prescribed polymerization reaction, providing such materials do not substantially interfere with the reaction mechanism or substantially decrease the beneficial properties of the final interpolymer prescribed herein.

The following examples, wherein all parts and percentages are by weight unless otherwise indicated, illustrate the present invention.

Example 1

A. Preparation of vinylidene chloride (VDC)/methyl methacrylate (MMA) interpolymers

A crystallizable, controlled composition VDC/MMA interpolymer was prepared by emulsion polymerization conducted in a one-gallon reactor. The initial aqueous polymerization medium consisted of the following ingredients:

    1513.00 grams of distilled water
      17.30 grams emulsifier (80% active) (dihexyl ester of sodium sulfo-succinic acid)
       4.13 grams emulsifier (38% active (sodium 2-ethylhexyl sulfate)
       9.20 grams sodium persulfate
       9.80 grams itaconic acid

The reactor was evacuated for 15 minutes while the aqueous medium was heated to 45°C. With the reactor at 45°C and the vacuum shut off, 121 grams of a 2000 gram primary monomer mixture composed of 90/10 VDC/MMA in weight percent was rapidly pumped into the reactor for the formation of a seed latex. The seed latex reaction was allowed to proceed until there was a 13.8 kPa (2 psi) pressure drop from the maximum pressure during the seed reaction. Immediately thereafter, the remainder of the primary monomer mixture was introduced at 121 grams per hour for a period of 5 hours to continuously provide an excess of unreacted monomer, i.e., a "flooding" stage, and then at a rate of 121 grams per hour wherein no excess of unreacted monomer was present in the polymerization medium, i.e., a "starved" stage. After the primary monomer mixture feed stream was shut off, a methyl methacrylate end-shot was pumped into the reactor over a period of approximately three hours in an amount sufficient to provide 2 1/2 weight percent methyl methacrylate, based on the weight of the primary monomer mixture. This was immediately followed by addition of a 2 weight percent solution of sodium bisulfite at 25 grams/hour and a 3 percent solution of sodium persulfate at 25 grams/hour for two hours. Thereafter, the reactor was cooled to 25°C and the latex was ready for coagulation. The process by which the so-formed interpolymer was obtained will be hereafter identified as Experiment (1) (A).

Similar good results were obtained by using an end-shot step which consisted of adding, immediately after the primary monomer mixture stream was shut off, 1.5 weight percent methyl methacrylate (MMA), based on the total weight of the primary monomer mixture, over a period of 1/2 hour while concurrently adding a 3 percent solution of sodium persulfate and a 2 percent solution of $NaHSO_3$ at 25 grams/hour each and, thereafter, continuing to add the sodium persulfate and $NaHSO_3$ over a 1 1/2 hour period after the MMA stream was shut off.

B. Recovery of the interpolymer from the latex

The interpolymer formed in Experiment (1) (A) was recovered from the latex by a conventional $CaCl_2$ coagulation technique: 35 cc of 32 percent $CaCl_2$ solution was added to 900 cc of water and the mixture heated to 40°C. Thereafter, 300 cc of latex was added to the mixture with vigorous stirring and the temperature was increased to 80°C and held there for 20 minutes. The mixture was then quenched with ice and the interpolymer collected and washed in a centrifuge. The interpolymer was dried to about 1 percent water, and was ready for evaluation.

C. Test for solubility of the interpolymer (haze stability)

Insolubility of the polymer manifests itself as the polymer crystallizes and causes the solution to be hazy. Though the polymer may go into solution initially, high VDC fractions tend to crystallize out to develop the characteristics haze. To be useful, the polymer must not develop hazy solutions upon standing for 24 hours at 25°C after dissolving for a period of 30 minutes in a solvent maintained at a temperature of 30°C. The haze or turbidity of 19.5 percent lacquer in a 65/35 tetrahydrofuran (THF)/toluene (Tol) solvent mixture was measured using a Beckman Model 25 UV Spectrophotometer at a wavelength of 640 nm. Haze values were taken initially and at 24 hours for the 19.5 percent solutions. The haze values are reported as percent transmission against a reference of the pure solvent mixture. The lower the transmission value, the higher the haze development. Solutions below 85 percent transmission tend to cause haze in the coatings.

D. Testing coating performance

Coating tests were conducted on coated polyester film. The film was coated with a 19.5 percent interpolymer lacquer solution using THF. The coating weight was adjusted to 4 grams/meter$^2$. The coated film was aged 16 hours at 60°C to ensure development of crystallinity before testing the coating.

The permeability to water vapor (WVTR) was measured with a Riegel-Mocon Model IRD-2 Infrared Diffusometer. The data are reported as grams of $H_2O$ passed through (645 cm$^2$) (100 in$^2$) of coated film in 24 hours for the coating weight of 4 grams/meter$^2$.

A Robot automatic controlled air-operated jaw sealer was used for measuring the minimum heat-seal temperature (MHST). Heat-seals were made at 5 degree intervals between 95°C and 135°C using 138 kPa (20 psi) jaw pressure und one second dwell time. The MHST is the temperature at which coating deformation is first observed when the seal is opened.

The following Table I sets forth the composition of the interpolymer, the haze stability of solutions thereof, and the minimum heat-seal temperature and WVTR of coatings prepared therefrom. For purposes of comparison with the interpolymer of Experiment (1)(A), a series of additional interpolymers (identified in Table I as Experiments B through F) were tested substantially as described above. The interpolymers of Experiments B through D were prepared by a polymerization technique substantially the same as that described in United States Patent 3,879,359. The interpolymers of Experiments E and F were prepared in a manner substantially the same as Experiment (1)(A) except or the changes indicated in Table I.

TABLE I

| Experiment no. | Composition mole % | | | | Rel. Visc. | MHST °C | WVTR g/645 cm²/ 24 hours | Laquer haze % transmission | |
|---|---|---|---|---|---|---|---|---|---|
| | VDC | MAN | MMA | VCN | | | | Initial | 24 Hours |
| For Comparison | | | | | | | | | |
| B | 92 | | 5.6 | 2.4 | 1.46 | 115—120 | 0.12 | 96 | gels |
| C | 90 | 7 | 3 | | 1.40 | 130 | 0.21 | 98 | low |
| D | 92 | | 4 | 4 | 1.47 | 125 | 0.17 | 96 | gels |
| E | 90.3 | | 9.7 | | 1.24 | 120 | 0.26 | 96 | 20 |
| (1.5 Hours Flooded —No End-Shot) | | | | | | | | | |
| F | 90.3 | | 9.7 | | 1.42 | 110 | 0.21 | 95 | 20 |
| (5 Hours Flooded —No End-Shot) | | | | | | | | | |
| The Invention | | | | | | | | | |
| A | 90.3 | | 9.7 | | 1.47 | 110 | 0.20 | 99 | 95 |
| (5 Hours Flooded Plus 2.5% End-Shot MMA in 3 Hours) | | | | | | | | | |

VDC=Vinylidene Chloride  MAN=Methacrylonitrile
MMA=Methyl Methacrylate  VCN=Acrylonitrile

As demonstrated by the data in Table I, the comparative interpolymers of Experiments B, C, D, E and F are all characterized by insufficient haze stability and higher heat-seal temperatures than the interpolymer of the present invention. Note in particular that in Experiment E, the short flooding stage and the lack of an end-shot comonomer resulted in, respectively, an undesirably low relative viscosity and poor haze stability. Also not that in Experiment F, the flooding stage was sufficient to produce the required relative viscosity but the lack of an end-shot comonomer resulted in poor haze stability.

Example 2

In each of a series of additional experiments, vinylidene chloride/methyl methacrylate interpolymers were prepared in a manner substantially the same as Experiment (1)(A), but using a series of different comonomers in the end-shot reaction. The following Table II sets forth the type of comonomer used, the minimum heat-seal temperature, WVTR, and lacquer haze stability of such compositions.

TABLE II

| End-shot Comonomer and wt % | Relative viscosity | MHST °C | WVTR g/645 cm$^2$/ 24 hours | Lacquer haze % transmission | |
|---|---|---|---|---|---|
| | | | | Initial | 24 hours |
| 3% MMA | 1.47 | 110 | 0.20 | 99 | 95 |
| 3% MA | 1.44 | 110—115 | 0.22 | 98 | 95 |
| 3% VA | 1.49 | 105—110 | 0.25 | 99 | 95 |
| 3% VCl | 1.46 | 110 | 0.25 | 99 | 95 |
| None (For Comparison) | 1.42 | 110 | 0.21 | 95 | 20 |

MMA=Methyl Methacrylate
MA=Methyl Acrylate
VA=Vinyl Acetate
VCl=Vinyl Chloride

All end-shots made to 90/10 weight percent VDC/MMA over a 2 hour period.

The data in Table II show that monomers $(M_2)$ having broad differences in structure and different reactivities $(r_1, r_2)$ with VDC can be used to control composition drift to prevent haze while at the same time permitting sufficient drift towards high VDC content to nucleate crystallization. The reactivity ratios of such monomers are as follows:

| $M_1$ | $r_1$ | $M_2$ | $r_2$ |
|---|---|---|---|
| vinylidene chloride | 1 | methyl acrylate | 1 |
| do | 3.6 | vinyl acetate | 0.03 |
| do | 3.2 | vinyl chloride | 0.3 |
| do | 0.24 | methyl methacrylate | 2.53 |

Example 3

In each of a series of additional experiments, vinylidene chloride/methyl methacrylate interpolymers were prepared in a manner substantially the same as Experiment (1)(A), but varying the amount of end-shot comonomer and/or the rate of addition during the end-shot polymerization step.

The following Table III and IV set forth the results obtained. Such data indicate that, under the conditions of these experiments, the addition of too little comonomer did not adversely affect permeability, but it failed to adequately prevent haze. On the other hand, the addition of excessive amounts of comonomer increased the permeability of the interpolymers. Such data further indicate that for a given rate of initiation and amount and type of comonomer, there is an optimum rate of addition that can be employed to obtain interpolymers having the properties required by the present invention. It should be noted, for example, that if a higher rate of initiation had been used in the 2% end-shot experiment in Table III, the resulting haze value would have improved.

Further note that, under the conditions of the experiments of Table IV, the barrier generally improved as the rate of addition was decreased (i.e., as the total period over which the end-shot monomer was added increased). In this regard, the interpolymers of the present invention will preferably have, in addition to the required haze and relative viscosity properties, a MHST no greater than 115°C and a WVTR no greater than 0.25 g 645 cm$^2$ (100 in$^2$)/24 hours when deposited as a coating from a tetrahydrofuran lacquer solution at a coating weight of 4 grams/meter$^2$. It will be appreciated that the interpolymers satisfying these stringent tests for MHST and WVTR will be eminently suited for commercial coating applications which generally employ solvent mixtures, for example, a mixture of 65 percent tetrahydrofuran and 35 percent toluene.

The experiments in Table III and IV wherein 4% of MA or MMA further monomer is employed are included for comparative purposes only.

## TABLE III

| End-shot comonomer and wt % | Relative viscosity | MHST °C | WVTR g/645 cm$^2$/ 24 hours | Lacquer haze % transmission | |
|---|---|---|---|---|---|
| | | | | Initial | 24 hours |
| For Comparison | | | | | |
| None | 1.42 | 110 | 0.21 | 95 | 20 |
| 2% MA | 1.56 | 110 | 0.20 | 99 | ·30 |
| The Invention | | | | | |
| 3% MA | 1.44 | 115 | 0.22 | 98 | 95 |
| 4% MA | 1.75 | 110 | 0.26 | 99+ | 99 |

MA=Methyl Acrylate

All end-shots made to 90/10 weight percent VDC/MMA interpolymers over a 1 hour period.

## TABLE IV
### WVTR g/(645 cm$^2$) (100 in$^2$)/24 hours

| End-shot add time (hours) | 2% MMA | 3% MMA | 4% MMA |
|---|---|---|---|
| 1 | 0.22 | 0.27 | 0.30 |
| 2 | 0.20 | 0.25 | 0.27 |
| 3 | 0.21 | 0.24 | 0.28 |

### MHST °C

| End-shot add time (hours) | | | |
|---|---|---|---|
| 1 | 100 | 100 | 100 |
| 2 | 100 | 105—110 | 115 |
| 3 | 110 | 115 | 115 |

All end-shots made to 90/10 weight percent VDC/MMA interpolymers.

The interpolymers of the present invention are ideally suited for coating plastic films and molded articles and particularly for coating cellophane and polyester films. Other base films, such as polypropylene, can also be used.

## Claims

1. A crystallizable, controlled composition interpolymer consisting essentially of (a) from 88 to 92 mole percent vinylidene chloride, (b) from 8 to 12 mole percent methyl methacrylate, and (c) one or more further ethylenically unsaturated comonomers or a further quantity of methyl methacrylate, in an amount of up to 3 weight percent, based on the combined weight of (a) and (b); the interpolymer having a relative viscosity of at least 1.40 at 25°C as a 1 percent solution in tetrahydrofuran and being capable of forming substantially haze-free solutions when present in an amount of 20 percent solids in a solvent mixture comprising 65 percent by weight tetrahydrofuran and 35 percent by weight toluene as measured in terms of at least 85 percent transmission of the solution, after ageing at 25°C for a period of 24 hours, against a reference of the pure solvent mixture using an ultraviolet spectrophotometer operating at a wavelength of 640 nm.

2. A crystallizable, controlled composition interpolymer as claimed in claim 1 wherein the ethylenically unsaturated comonomer is methyl acrylate, methyl methacrylate, vinyl chloride, methacrylic acid or vinyl acetate.

3. A crystallizable, controlled composition interpolymer as claimed in claim 1 or claim 2 consisting essentially of (a) 90 mole percent vinylidene chloride, (b) 10 mole percent methyl methacrylate, and (c)

9

one or more further ethylenically unsaturated comonomers or a further quantity of methyl methacrylate, in an amount of from 1 to 3 weight percent, based on the combined weight of (a) and (b).

4. A crystallizable, controlled composition interpolymer as claimed in any one of the preceding claims which has a minimum heat-seal temperature no greater than 115°C and a water-vapour transmission rate of no greater than 0.25 g/(645 cm²) (100 in²)/24 hours when deposited as a coating from a tetrahydrofuran lacquer solution at a coating weight of 4 grams/meter².

5. A process for preparing, in aqueous emulsion, a crystallizable, controlled composition interpolymer consisting essentially of (a) from 88 to 92 mole percent vinylidene chloride, (b) from 8 to 12 mole percent methyl methacrylate, and (c) one or more further ethylenically unsaturated comonomers or a further quantity of methyl methacrylate, in an amount of up to 3 weight percent, based on the combined weight of (a) and (b); which process comprises the sequential steps of: polymerizing a primary monomer mixture consisting essentially of from 88 to 92 mole percent vinylidene chloride and from 8 to 12 mole percent methyl methacrylate in an aqueous polymerization medium containing an emulsifier, a polymerization initiator, and, optionally, a polymerizable acid; wherein from 35 to 45 percent of the primary monomer mixture is added to the aqueous medium at a rate sufficient to continuously provide an excess of unreacted monomer in the aqueous medium and the remainder of the primary monomer mixture is added to the aqueous medium at a rate sufficient to continuously preclude the presence of an excess of unreacted monomer in the aqueous medium; and following the addition of substantially all of the primary monomer mixture, adding component (c) to the polymerization medium in an amount and under conditions sufficient to control composition drift in the crystallizable interpolymer.

6. A process as claimed in claim 5 wherein component (c) is added in an amount of from 1 to 3 weight percent based on the total weight of the primary monomer mixture.

7. A process as claimed in claim 5 or claim 6 wherein component (c) is methyl acrylate, methyl methacrylate, vinyl chloride, methacrylic acid or vinyl acetate.

8. A process as claimed in any one of claims 5 to 7 wherein the primary monomer mixture is 90 mole percent vinylidene chloride and 10 mole percent methyl methacrylate.

9. A process as claimed in any one of claims 5 to 8 wherein the addition of component (c) to the aqueous medium is begun immediately after all of the primary monomer mixture has been added.

10. A process as claimed in any one of claims 5 to 9 wherein component (c) is added to the polymerization over a period of from 1/4 to 3 hours.

## Revendications

1. Copolymère cristallisable de composition contrôlée constitué essentiellement par (a) 88 à 92% en mole de chlorure de vinylidène, (b) 8 à 12% en mole de méthacrylate de méthyle et (c) n ou plusieurs autre(s) comonomère(s) éthyléniquement insaturé(s) ou une quantité supplémentaire de méthacrylate de méthyle, en une quantité allant jusqu'à 3% en poids, calculée sur le poids combiné de (a) et (b); le copolymère ayant une viscosité relative d'au moins 1,40, à 25°C, en solution à 1% dans le tétrahydrofuranne, et étant capable de former des solutions sensiblement sans opalescence, quand il est présent à raison de 20% de matière solides dans un mélange de solvants comprenant 65% en poids de tétrahydrofuranne et 35% en poids de toluène, telle que mesurée en termes de transmission de la solution d'au moins 85%, après vieillissement de 24 heures à 25°C, par rapport au mélange de solvants pur priscomme référence en utilisant un spectrophotomère à ultraviolet fonctionant à une longueur d'onde de 640 nm.

2. Copolymère cristallisable, de composition contrôlée, selon la revendication 1, dans lequel le comonomère éthyléniquement insaturé est l'acrylate deméthyle, le méthacrylate de méthyle, le chlorure de vinyle, l'acide méthacrylique ou l'acétate de vinyle.

3. Copolymère cristallisable de composition contrôlée selon la revendication 1 ou la revendication 2, constitué essentiellement par (a) 90% en mole de chlorure de vinylidène, (b) 10% en mole de méthacrylate de méthyle, et (c) un ou plusieurs autre(s) comonomères(s) éthyléniquement insaturé(s) ou une quantité supplémentaire de méthacrylate de méthyle, en une quantité comprise entre 1 et 3% en poids, calculée sur le poids combiné de (a) et (b).

4. Copolymère cristallisable, de composition contrôlée, selon l'une quelconque des revendications précédentes, qui a une température minimum de soudage à chaud ne dépassant pas 115°C et une perméabilité à la vapeur d'eau ne dépassant pas 0,25 g/645 cm² (100 pouces²)/24 heures quand il est déposé comme revêtement à partir d'une solution de laque dans le tétrahydrofuranne, à raison d'une couverture de 4 g/m².

5. Procédé de préparation en émulsion aqueuse d'un copolymère cristallisable, de composition contrôlée, constitué essentiellement par (a) 88 à 92% en mole de chlorure de vinylidène, (b) 8 à 12% en mole de méthacrylate de méthyle et (c) un ou plusieurs autre(s) comonomère(s) éthyléniquement insaturé(s) ou une quantité supplémentaire de méthacrylate de méthyle, en une quantité allant jusqu'à 3% en poids, calculée sur le poids combiné de (a) et (b); procédé qui compend les stades successifs consistant à polymériser un mélange primaire de monomères constitué essentiellement par 88 à 92% en mole de chlorure de vinylidène et par 8 à 12% en mole deméthacrylate de méthyle, dans un milieu aqueux de polymérisation contenant un émulsifiant, un amorceur de polymérisation et, éventuellement, un acide polymèrisable; dans lequel 35 à 45% du mélange primaire de monomères sont ajoutés au milieu aqueux à une vitesse suffisante pour fournir continuellement un excès de monomère n'ayant pas réagi dans le milieu aqueux, et le reste du mélange primaire de monomères est ajouté au milieu aqueux à une vitesse suffisante pour éliminer continuellement la présence d'un excès de monomère n'ayant pas réagi dans le milieu aqueux; et après l'addition de presque la totalité du mélange primaire de monomères, à ajouter le constituant (c) au milieu de polymérisation en une quantité et dans des conditions suffisantes pour contrôler les variations de la composition dans le copolymère cristallisable.

6. Procédé selon la revendication 5, dans lequel le constituant (c) est ajouté en une quantité de 1 à 3% en poids, calculée sur le poids total du délange primaire de monomères.

7. Procédé selon la revendication 5 ou la revendication 6, dans lequel le constituant (c) est l'acrylate de méthyle, le méthacrylate de méthyle, le chlorure de vinyle, l'acide méthacrylique ou l'acétate de vinyle.

8. Procédé selon l'une quelconque des revendications 5 à 7, dans lequel le mélange primaire de monomères est constitué par 90% en mole de chlorure de vinylidène et par 10% en mole de méthacrylate de méthyle.

9. Procédé selon l'une quelconque des revendications 5 à 8, dans lequel l'addition du constituant (c) au milieu aqueux est commencée immédiatement après que la totalité du mélange primaire de monomères a été ajoutée.

10. Procédé selon l'une quelconque des revendications 5 à 9, dans lequel le constituant (c) est ajouté à la polymérisaion sur une période comprise entre 1/4 et 3 heures.

**Patentansprüche**

1. Copolymeres von kontrollierter Zusammensetzung, bestehend im wesentlichen aus (a) 88 bis 92 Molprozent Vinylidenchlorid, (b) 8 bis 12 Molprozent Methylmethacrylat und (c) einem oder mehreren weiteren ethylenisch ungesättigten Comonomeren oder einem weiteren Anteil an Methylmethacrylat in einer Menge bis zu 3 Geweichtprozent, bezogen auf das Gesamtgewicht von (a) und (b), wobei das Copolymere eine relative Viskosität von mindestands 1,40 bei 25 Grad Celsius in einer einprozentigen Lösung in Tetrahydrofuran hat und in der Lage ist, im wesentlichen trübungsfreie Lösungen zu bilden, wenn es in einer Menge von 20 Prozent Feststoffen in einer Lösungsmittelmischung aus 65 Gewichtsprozent Tetrahydrofuran und 35 Gewichtsprozent Toluol vorliegt, gemessen, als mindestens 85-prozentige Durchlässigkeit der Lösung nach Alterung bei 25 Grad Celsius für einen Zeitraum von 24 Stunden, unter Bezugnahme auf die reine Lösung und unter Verwendung eines bei einer Wellenlänge von 640 nm betriebnen Ultraviolett-Spektrophotometers.

2. Kristallisierbares Copolymers von kontrollierter Zusammensetzung nach Anspruch 1, dadurch gekennzeichnet, daß das ethylenisch ungesättigte Comonomere Methylacrylat, Methylmethacrylat, Vinylchlorid, Methacrylsäure oder Vinylacetat ist.

3. Kristallisierbares Copolymeres von kontrollierter Zusammensetzung nach Anspruch 1 oder 2, dadurch gekennzeichnet, daß es im wesentlichen besteht aus (a) 90 Molprozent Vinylidenchlorid, (b) 10 Molprozent Methylmethacrylat und (c) einem oder mehreren ethylenisch ungesättigten Comonomeren oder einem weiteren Anteil an Methylmethacrylat in einer Menge von 1 bis 3 Gewichtsprozent, bezogen auf das Gesamtgewicht von (a) und (b).

4. Kristallisierbares Copolymeres von kontrollierter Zusammensetzung nach einem der vorhergehenden Ansprüche, dadurch gekennzeichnet, daß es eine minimale Heißsiegeltemperatur von nicht größer als 115 Grad Celsius und eine Wasserdampfdurchlässigkeitsgeschwindigkeit von nicht größer als 0,25 g/645 cm² (100 in²)/24 Stunden hat, wenn es als Überzug aus einer Tetrahydrofuran-Lacklösung bei einem Überzugsgewicht von 4 g/m² abgeschieden worden ist.

5. Verfahren zur Herstellung in wässriger Emulsion eines kristallisierbaren Copolymeren von kontrollierter Zusammensetzung, bestehend im wesentlichen aus (a) 88 bis 92 Molprozent Vinylidenchlorid, (b) 8 bis 12 Molprozent Methylmethacrylat und (c) einem oder mehreren weiteren ethylenisch ungesättigten Comonomeren oder einem weiteren Anteil an Methylmethacrylat in einer Menge bis zu 3 Gewichtsprozent, bezogen auf das Gesamtgewicht von (a) und (b), dadurch gekennzeichnet, daß Verfahren die aufeinanderfolgenden Stufen besitzt: Polymerisieren einer primären Monomer-Mischung, bestehend im wesentlichen aus 88 bis 92 Molprozent Vinylidenchlorid und 8 bis 12 Molprozent Methylmethacrylat, in einem wässrigen Polymerisationsmedium, das einem Emulgator, einen Polymerisationsinitiator und gegebenenfalls eine polymerisierbare Säure enthält, wobei 35 bis 45 Prozent der primären Monomer-Mischung dem wässrigen Medium mit einer ausreichenden Geschwindigkeit zugegeben werden, um kontinuierlich einen Überschuß von nicht-umgesetzten Monomeren in dem wässrigen Medium zur Verfügung zu stellen, und der Rest der Primären Monomer-Mischung zu dem wässrigen Medium mit einer ausreichenden Geschwindigkeit zugegeben wird, um kontinuierlich die Gegenwart eines Überschusses von nicht-umgesetzten Monomeren in dem wässrigen Medium auszuschließen, und nach Zugabe von im wesentlichen der gesamten primären Monomer-Mischung Einführen der Komponente (c) in das Polymerisationsmedium in einer Menge und unter Bedingungen,

**0 005 344**

die ausreichend sind, um das Abweichen der Zusammensetzung des kristallisierbaren Copolymeren zu kontrollieren.

6. Verfahren nach Anspruch 5, dadurch gekennzeichnet, daß die Komponente (c) in einer Menge von 1 bis 3 Gewichtsprozent, bezogen auf das Gesamtgewicht der primären Monomer-Mischung, zugegeben wird.

7. Verfahren nach Anspruch 5 oder 6, dadurch gekennzeichnet, daß die Komponente (c) Methylacrylat, Methylmethacrylat, Vinylchlorid, Methacrylsäure oder Vinylacetat ist.

8. Verfahren nach einem der Ansprüche 5 bis 7, dadurch gekenneichnet, daß die primäre Monomer-Mischung 90 Molprozent Vinylidenchlorid und 10 Molprozent Methylmethacrylat enthält.

9. Verfahren nach einem der Ansprüche 5 bis 8, dadurch gekennzeichnet, daß die Zugabe der Komponente (c) zu dem wässrigen Medium sofort aufgenommen wird, nachdem die gesamte primäre Monomer-Mischung zugegeben worden ist.

10. Verfahren nach einem der Ansprüche 5 bis 9, dadurch gekennzeichnet, daß die Komponente (c) im Verlauf von 1/4 bis 3 Stunden während der Polymerisation zugegeben wird.